# EUROPÄISCHE PATENTSCHRIFT

(11) **EP 1 470 396 B1**
(45) Veröffentlichungstag und Bekanntmachung des Hinweises auf die Patenterteilung: **29.03.2006**
(21) Anmeldenummer: 03729460.0
(22) Anmeldetag: 15.01.2003
(51) Int. Cl.: G01G 3/14, G01L 1/22

(54) **KRAFTAUFNEHMER**
FORCE SENSOR
CAPTEUR DE FORCE

(30) Priorität: 21.01.2002 DE 10202400
(43) Veröffentlichungstag der Anmeldung: 27.10.2004
(73) Patentinhaber: SARTORIUS AG, 37075 Göttingen (DE)
(72) Erfinder: SCHULZE, Werner, 37083 Göttingen (DE); KUHLMANN, Otto, 37085 Göttingen (DE)
(86) Internationale Anmeldenummer: PCT/EP2003/000331
(87) Internationale Veröffentlichungsnummer: WO 2003/060439

(56) Entgegenhaltungen:
- WO-A-02/08705
- WO-A-96/27780
- DE-A- 3 824 636
- FR-A- 2 386 024
- GB-A- 2 101 753
- US-A- 4 196 784
- US-A- 5 756 943
- US-A- 6 002 090

## Beschreibung

Die Erfindung bezieht sich auf einen Kraftaufnehmer mit zwei Krafteinleitungselementen, an denen die zu messende Kraft und die Abstützkraft eingeleitet werden, wobei die beiden Krafteinleitungselemente rotationssymmetrisch ausgebildet und in axialer Richtung beabstandet sind und wobei die zu messende Kraft und die Abstützkraft in radialer Richtung eingeleitet werden, und mit einem Federelement, dass in axialer Richtung zwischen den beiden Krafteinleitungselementen angeordnet ist und diese verbindet und dessen belastungsabbängige Deformation in ein elektrisches Signal umgewandelt wird.

Kraftaufnehmer dieser Art sind z. B. aus der US 6 002 090 bekannt. Bei Kraftaufnehmern dieser Art besteht allgemein der Wunsch, dass eine Kraft in der Messrichtung zu einem möglichst großen Ausgangssignal führt, eine Kraft in einer dazu senkrechten Richtung jedoch zu möglichst keinem Ausgangssignal (keine Querempfindlichkeit). Dieses Ziel wird im Wesentlichen durch eine geschickte Anordnung von Dehnungsmessstreifen zur Messung der belastungsabhängigen Deformation erreicht, die so erfolgt, dass die Signale der einzelnen Dehnungsmessstreifen sich in Messrichtung addieren, in den dazu senkrechten Richtungen jedoch subtrahieren. Es verbleiben dann nur noch Restsignale aufgrund von geringen Unsymmetrien des mechanischen Aufbaus und der Dehnungsmessstreifen. Um auch diesen Restfehler zu korrigieren, ist es in der US 6 002 090 vorgesehen, dass zusätzlich zu den in der Messrichtung empfindlichen Dehnungsmessstreifen weitere Dehnungsmessstreifen auf dem Federelement angeordnet sind, die senkrecht zur Messrichtung empfindlich sind und deren Signal den Fehler des Signals der Dehnungsmessstreifen in Messrichtung korrigiert. Diese weiteren Dehnungsmessstreifen und die dazugehörige elektronische Schaltung verteuert die Herstellung der Kraftaufnehmer jedoch deutlich.

Aufgabe der Erfindung ist es daher, einen Kraftaufnehmer der eingangs genannten Art anzugeben, bei dem die Querempfindlichkeit durch rein mechanische Mittel, also ohne zusätzliche Messelemente wie z.B. Dehnungsmessstreifen und ohne zusätzliche Auswerteelektronik, reduziert wird.

Erfindungsgemäß wird dies dadurch erreicht, dass die beiden Krafteinleitungselemente zusätzlich durch ein rohrförmiges Führungselement miteinander verbunden sind, das das Federelement umgibt, und dass im rohrförmigen Führungselement durch mindestens eine Querbohrung eine Parallelführung aus mindestens zwei Lenkern erzeugt ist, wodurch das rohrförmige Führungselement in der Richtung der zu messenden Kraft eine geringere Steifigkeit aufweist als in der dazu senkrechten Richtung.

Durch das zusätzliche rohrförmige Führungselement zwischen den beiden Krafteinleitungselementen entsteht ein Kraftnebenschluss zum Federelement, sodass nur ein Teil der eingeleiteten Kräfte auf das Federelement einwirkt. Durch die verschiedene Steifigkeit des zusätzlichen Führungselementes in den verschiedenen Richtungen ist dieser Bruchteil je nach Kraftrichtung verschieden: In der Messrichtung ist das zusätzliche Führungselement relativ weich und der Kraftanteil, der durch das Federelement geht, also relativ groß. Senkrecht zur Messrichtung ist das zusätzliche Federelement jedoch hart und übernimmt daher den größten Teil der eingeleiteten Kraft. Kräfte senkrecht zur Messrichtung erreichen daher das Federelement nur stark abgeschwächt. Daher reichen die bekannten Maßnahmen der geometrischen Anordnung der Dehnungsmessstreifen auf dem Federelement und die Verschaltung zu einer Wheatstoneschen Brücke aus, um das Ausgangssignal von Kräften senkrecht zur Messrichtung praktisch ganz auf Null zu reduzieren.

Durch die rohrförmige Gestalt ist das Führungselement besonders platzsparend und lässt sich günstig herstellen. Das Führungselement nimmt damit die rotationssymmetrische Gestalt des restlichen Kraftaufnehmers auf und kann im selben Arbeitsgang im Drehautomaten hergestellt werden. Dies gilt besonders, wenn die Krafteinleitungselemente und das Führungselement einstückig ausgebildet sind. Auch die Querbohrung(en) zur Erzeugung der Parallelführung ist/sind leicht herstellbar und lässt/lassen sich in Bearbeitungszentren ohne Umspannen anbringen.

Weitere vorteilhafte Ausgestaltungen ergeben sich aus den abhängigen Ansprüches 4 bis 10.

Die Erfindung wird im Folgenden anhand der schematischen Figuren beschrieben. Dabei zeigt:
Figur 1 eine Seitenansicht des Kraftaufnehmers ohne das Federelement,
Figur 2 eine Seitenansicht des Federelementes,
Figur 3 eine Aufsicht auf das Federelement,
Figur 4 eine Hülse, die auf den Kraftaufnehmer aufgeschraubt werden kann, und
Figur 5 eine alternative Ausführungsform des Kraftaufnehmers in Seitenansicht

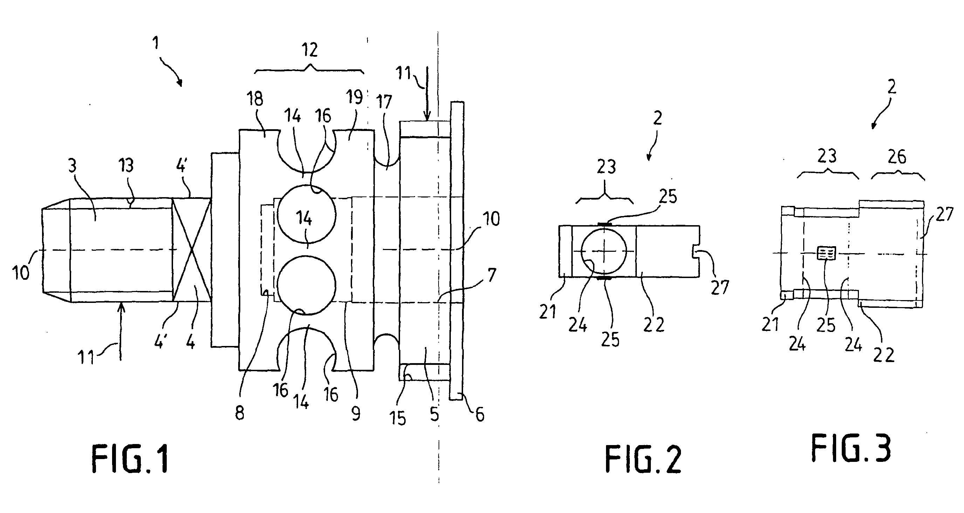

Der Kraftaufnehmer 1 ist in Figur 1 in Seitenansicht dargestellt - der Übersichtlichkeit halber ohne das Federelement. Das Federelement 2 ist in Figur 2 ebenfalls in Seitenansicht dargestellt. Im montierten Zustand ist der vordere Teil 21 des Federelementes kraftschlüssig mit dem Endbereich 8 des Sackloches 7 verbunden, während der hintere Teil 22 des Federelementes mit dem Bereich 9 des Sackloches verbunden ist.

Der Kraftaufnehmer 1 ist im Wesentlichen rotationssymmetrisch aufgebaut mit der Symmetrieachse 10. Die zu messende Kraft und die Abstützkraft - in Figur 1 durch die beiden Pfeile 11 angedeutet - greifen einerseits an einem mit Gewinde 15 versehenen und durch einen Flansch 6 begrenzten Bund 5 und andererseits an einem mit einem Gewinde 13 versehenen Achsstummel 3 an. Bund 5 mit Flansch 6 und Achsstummel 3 bilden also die beiden Krafteinleitungselemente. Zur exakten Ausrichtung der Kraftmessrichtung des Kraftaufnehmers beim Einbau weist der Achsstummel 3 im hinteren Bereich einen Vierkant 4 auf, dessen vordere und hintere Begrenzungsfläche parallel zur Messrichtung ist und dessen obere und untere Begrenzungsfläche 4' senkrecht zur Messrichtung ist. Statt des Vierkantes kann z. B. auch ein Orientierungsstift zur Ausrichtung des Kraftaufnehmers vorhanden sein. Zwischen den beiden Krafteinleitungselementen 5/6 und 3 befindet sich zum einen das Federelement 2 und zum anderen ein Führungselement 12. Das Führungselement 12 besteht aus einem stabilen Bereich 18, der mit dem Achsstummel 3 verbunden ist, aus einem stabilen Bereich 19, der über eine Einschnürung 17 mit dem Bund 5 verbunden ist, und aus drei Lenkern 14, die die Bereiche 18 und 19 in Form einer Parallelführung miteinander verbinden. Die drei Lenker 14 sind durch vier Querbohrungen 16 aus dem ansonsten an dieser Stelle rohrförmigen Führungselement 12 herausgearbeitet. Durch diese Ausgestaltung des Führungselementes ist dieses in Richtung der zu messenden Kräfte 11 relativ weich, während es in der dazu senkrechten Richtung eine deutlich höhere Steifigkeit aufweist. Beispielsweise beträgt die Steifigkeit in Richtung der zu messenden Kräfte 11 nur 1 MN/mm während sie in der dazu senkrechten Richtung 1000 MN/mm beträgt.

Im Sackloch 7 des Kraftaufnehmers 1 befindet sich nun das Federelement 2, wie es in Figur 2 in Seitenansicht - also genauso wie der restliche Kraftaufnehmer in Figur 1 - dargestellt ist. In Figur 3 ist das Federelement 2 in Aufsicht - also um 90° gegenüber Figur 2 gedreht - dargestellt. Das Federelement 2 ist z. B. aus einem Vollzylinder durch beidseitiges Abfräsen hergestellt. Der vordere Teil 21 des Federelementes 2 ist beim zusammengebauten Kraftaufnehmer im Endbereich 8 des Sackloches 7 eingeschweißt, eingeklebt, eingeschrumpft oder auf-andere Weise kraftschlüssig befestigt. Der mittlere Teil 23 hat keinen Kontakt zur Wandung, da in diesem Bereich das Sackloch 7 einen größeren Durchmesser hat, wie in Figur 1 erkennbar. Erst die Stufe 22 des Federelementes 2 liegt im Bereich 9 des Sackloches 7 an der Wandung an und ist mit dieser durch Schweißen, Kleben, Schrumpfen oder auf andere Art kraftschlüssig verbunden. Der hintere Bereich 26 des Federelementes 2 ist wieder frei, da in der Ausgestaltung des Kraftaufnehmers gemäß Figur 1 der Durchmesser des Sackloches 7 dort nochmal größer ist. Ganz am Ende weist das Federelement 2 einen Schlitz 27 auf, der die Ausrichtung des Federelementes relativ zur Messrichtung beim Einbau unterstützt. Das Federelement 2 weist ferner eine durchgehende Querbohrung 24 auf, sodass auf jeder Seite nur ein relativ dünner Materialbereich stehenbleibt, auf den in bekannter Weise Dehnungsmessstreifen appliziert sind.

Durch die eben erläuterte Anordnung des Federelementes 2 und des umgebenden Führungselementes 12 sind beide Elemente kraftmäßig parallel geschaltet. Die Messkraft und auch Querkräfte teilen sich also auf die beiden Wege auf, wobei sich das Verhältnis der Teilkräfte nach dem Verhältnis der jeweiligen Steifigkeiten richtet. Beträgt die Steifigkeit des Führungselementes 12 in Messrichtung z. B. 1 MN/mm und in der dazu senkrechten Richtung 1000 MN/mm und die Steifigkeit des Federelementes 2 in Messrichtung 10 kN/mm und in der dazu senkrechten Richtung 100 kN/mm, so wirken auf das Federelement 2 in Messrichtung knapp 1 % der einwirkenden Kraft und in der dazu senkrechten Richtung nur knapp 0,01 %.- Durch die stark unterschiedliche Steifigkeit des Führungselementes 12 in den beiden Richtungen werden also Querkräfte um einen Faktor 100 geringer auf das Federelement 12 mit seinen Dehnungsmessstreifen übertragen als die zu messenden Kräfte. Zusammen mit den bekannten Methoden der geometrischen Anordnung der Dehnungsmessstreifen auf dem Federelement 2 und der Verschaltung zu einer Weatstoneschen Brücke lässt sich dadurch eine so große Unterdrückung des Einflusses von Querkräften auf das Ausgangssignal erreichen, dass der Einfluss in der allgemeinen Messungenauigkeit untergeht.

In Figur 1 sind die beiden Krafteinleitungselemente 3 und 5/6 und das Führungselement 12 einstückig ausgeführt. Diese Bauweise sorgt für eine geringe Hysterese. Da bei einer Dimensionierung gemäß dem angegebenen Zahlenbeispiel gut 99 % der Messkraft über das Führungselement 12 geleitet wird, ergibt eine geringe. Hysterese des Führungselementes auch eine geringe Hysterese des gesamten Kraftaufnehmers.

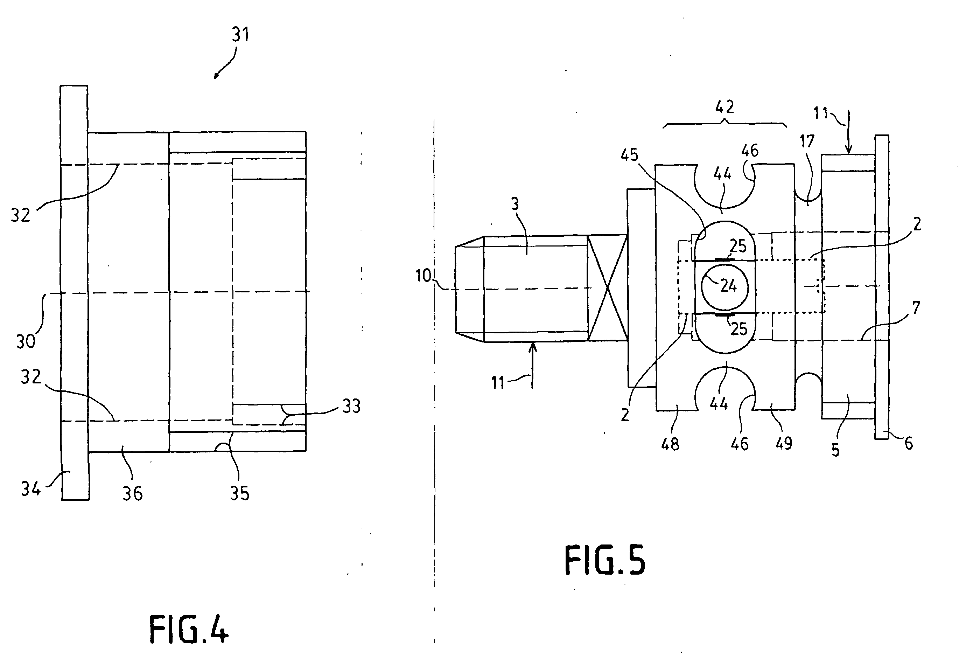

In Figur 4 ist eine Hülse 31 in Seitenansicht dargestellt, die auf den Kraftaufnehmer 1 aufgeschraubt werden kann. Die Hülse 31 ist rotationssymmetrisch aufgebaut, die Symmetrieachse ist mit 30 bezeichnet. Die Hülse weist in ihrer Kernbohrung 32 ein Innengewinde 33 auf, das auf das Außengewinde 15 des Kraftaufnehmers 1 geschraubt werden kann. Auf der Außenseite weist die Hülse 31 einen Abschlussflansch 34 und ein Außengewinde 35 auf - durch diese Hülse kann der Bund 5 mit dem Flansch 6 als Krafteinleitungselement vergrößert werden. Die Krafteinleitung kann dann je nach Erfordernis des Einbaufalles des Kraftaufnehmers am Außengewinde 35 oder am gewindefreien Bereich 36 oder am Flansch 34 erfolgen. Beispielsweise kann der Kraftaufnehmer mit der Hülse 31 in ein mit einem Loch versehenen Blech eingebaut werden, indem das Blech zwischen dem Abschlussflansch 34 und einer Mutter auf dem Außengewinde 35 eingeklemmt wird. Diese Krafteinleitung in der Nähe des Abschlussflansches 34 verringert den seitlichen Abstand zwischen Kraft und Abstützkraft (Kräfte 11 in Figur 1) und verringert dadurch das aufzunehmende Drehmoment. Außerdem wirkt die Hülse 31 als Schutz vor Umgebungseinflüssen (z. B. Staub) und auch als radialer Überlastschutz.

In Figur 5 ist eine alternative Ausführungsform des Kraftaufnehmers in Seitenansicht dargestellt. Gleiche Teile wie in den Figuren 1 und 2 sind mit den gleichen Bezugszahlen bezeichnet und werden nicht nochmal erläutert. Die Unterschiede bestehen nur in der Form des Führungselementes: Das Führungselement 42 besitzt zwei Lenker 44, die die stabilen Bereiche 48 und 49 verbinden. Die Lenker 44 sind durch zwei Bohrungen 46 und ein Langloch 45 erzeugt. - Durch den Fortfall des dritten Lenkers im Führungselement beträgt dessen Steifigkeit in Richtung der zu messenden Kräfte 11 nur zwei Drittel der Steifigkeit der Ausführungsform gemäß Figur 1. Auch senkrecht zur Richtung der zu messenden Kräfte sinkt die Steifigkeit um etwa den gleichen Faktor, sodass die Unterdrückung von Querkräften für beide Varianten etwa gleich ist.

In Figur 5 erkennt man weiterhin, dass im fertigen Kraftaufnehmer die Dünnstellen der Lenker 44 und die Dünnstellen im Federelement 2 unter den Dehnungsmessstreifen 25 in der gleichen Ebene liegen. Dieses gilt auch für den Kraftaufnehmer gemäß Figur 1 und 2.

## Patentansprüche

1. Kraftaufnehmer mit zwei Krafteinteitungselementen (3,5/6), an denen die zu messende Kraft und die Abstützkraft (11) eingeleitet werden, wobei die beiden Krafteinleitungselemente rotationssymmetrisch ausgebildet und in axialer Richtung beabstandet sind und wobei die zu messende Kraft und die Abstützkraft in radialer Richtung eingeleitet werden, und mit einem Federelement (2), das in axialer Richtung zwischen den beiden Krafteinleitungselementen angeordnet ist und diese verbindet und dessen belastungsabhängige Deformation in ein elektrisches Signal umgewandelt wird, **dadurch gekennzeichnet, dass** die beiden Krafteinleitungstlemente (3,5/6) zusätzlich durch ein rohrförmiges Führungselement (12,42) miteinander verbunden sind, das das Federelement (2) umgibt, und dass im rohrförmigen Führungselement (12, 42) durch mindestens eine Querbohrung (16; 45, 46) eine Parallelführung aus mindestens zwei Lenkern (14, 44) erzeugt ist, wodurch das rohrförmige Führungselement (12, 42) in der Richtung der zu messenden Kraft (11) eine geringere Steifigkeit aufweist als in der dazu senkrechten Richtung.

2. Kraftaufnehmer nach Anspruch 1, **dadurch gekennzeichnet, dass** das **rohrförmige Führungselement (12, 42) zusammen mit den beiden Krafteinleitungselementen (3, 5/6) einstückig ausgebildet ist.**

3. Kraftaufnehmer nach Anspruch 1, **dadurch gekennzeichnet, dass** das rohrförmige Führungselement (12) drei Lenker (14) aufweist.

4. Kraftaufnehmer nach Anspruch 1, **dadurch gekennzeichnet, dass** an einem Krafteinleitungselement (3) ein Vierkant (4) zur exakten Ausrichtung des Kraftaufnehmers relativ zur Richtung der zu messenden Kraft angeordnet ist.

5. Kraftaufnehmer nach Anspruch 1, **dadurch gekennzeichnet, dass** an einem Krafteinleitungselement (3) ein Orientierungsstift zur exakten Ausrichtung des Kraftaufnehmers relativ zur Richtung der zu messenden Kraft angeordnet ist.

6. Kraftaufnehmer nach Anspruch 1, **dadurch gekennzeichnet, dass** das Federelement (2) zwischen den beiden Krafteinleitungselementen (3, 5/6) eingeschweißt ist.

7. Kraftaufnehmer nach Anspruch 1, **dadurch gekennzeichnet, dass** das Federelement (2) zwischen den beiden Krafteinleitungselementen (3, 5/6) eingeschrumpft ist.

8. Kraftaufnehmer nach Anspruch 1, **dadurch gekennzeichnet, dass** das Federelement (2) zwischen den beiden Krafteinleitungselementen (3, 5/6) eingeklebt ist.

9. Kraftaufnehmer nach Anspruch 1, **dadurch gekennzeichnet, dass** das Federelement (2) als Blattfeder ausgebildet ist und eine mittige Querbohrung (24) aufweist und dass Dehnungsmessstreifen (25) auf den durch die Querbohrung erzeugten Dünnstellen angeordnet sind.

10. Kraftaufnehmer nach Anspruch 1, **dadurch gekennzeichnet, dass** der Kraftaufnehmer eine Hülse (31) aufweist, die auf ein Krafteinleitungselement (5/6) aufgeschraubt werden kann und das rohrförmige Führungselement (12, 42) umgibt.

## Revendications

1. Récepteur de forces doté de deux éléments d'introduction de force (3, 5/6), dans lesquels sont introduites la force destinée à être mesurée et la force de soutien (11), les deux éléments d'introduction de force étant conçus à symétrie de révolution et étant distants dans la direction axiale et la force destinée à être mesurée et la force de soutien étant introduites dans la direction radiale, et doté d'un élément élastique (2), qui est disposé dans la direction axiale entre les deux éléments d'introduction de force et relie ceux-ci et dont la déformation en fonction de la sollicitation est convertie en un signal électrique, **caractérisé en ce que** les deux éléments d'introduction de force (3, 5/6) sont reliés en plus l'un à l'autre par un élément de guidage tubulaire (12, 42), qui entoure l'élément élastique (2), et **en ce qu'**un guidage parallèle composé d'au moins deux bielles (14, 44) est généré dans l'élément de guidage tubulaire (12, 42) par au moins un alésage transversal (16 ; 45, 46), grâce à quoi l'élément de guidage tubulaire (12, 42) comprend dans la direction de la force (11) destinée à être mesurée une rigidité inférieure à celle dans la direction perpendiculaire à celle-ci.

2. Récepteur de force selon la revendication 1, **caractérisé en ce que** l'élément de guidage tubulaire (12, 42) est conçu en une seule pièce conjointement avec les deux éléments d'introduction de force (3, 5/6).

3. Récepteur de force selon la revendication 1, **caractérisé en ce que** l'élément de guidage tubulaire (12) comprend trois bielles (14).

4. Récepteur de force selon la revendication 1, **caractérisé en ce qu'**un quatre-pans (4) destiné à orienter de manière exacte le récepteur de force par rapport à la direction de la force destinée à être mesurée est disposé sur un élément d'introduction de force (3).

5. Récepteur de force selon la revendication 1, **caractérisé en ce qu'**une broche d'orientation destinée à orienter de manière exacte le récepteur de force par rapport à la direction de la force destinée à être mesurée est disposé sur un élément d'introduction de force (3).

6. Récepteur de force selon la revendication 1, **caractérisé en ce que** l'élément élastique (2) est soudé entre les deux éléments d'introduction de force (3, 5/6).

7. Récepteur de force selon la revendication 1, **caractérisé en ce que** l'élément élastique (2) est rétréci entre les deux éléments d'introduction de force (3, 5/6).

8. Récepteur de force selon la revendication 1, **caractérisé en ce que** l'élément élastique (2) est collé entre les deux éléments d'introduction de force (3, 5/6).

9. Récepteur de force selon la revendication 1, **caractérisé en ce que** l'élément élastique (2) est conçu comme un ressort à lame et comprend un alésage transversal central (24) et **en ce que** des jauges extensométriques (25) sont disposées sur les points minces générés par l'alésage transversal.

10. récepteur de force selon la revendication 1, **caractérisé en ce que** le récepteur de force comprend un manchon (31), qui peut être vissé sur un élément d'introduction de force (5/6) et entoure l'élément de guidage tubulaire (12, 42).

## Claims

1. Force pick-up with two force introducing elements (3, 5/6), at which the force to be measured and the supporting force (11) are introduced, wherein the two force introducing elements are formed to be rotationally symmetrical and are spaced apart in axial direction and wherein the force to be measured and the supporting force are introduced in radial direction, and with a spring element (2), which is arranged in axial direction between the two force introducing elements and connects these and the load-dependent deformation of which is converted into an electrical signal, **characterised in that** the two force introducing elements (3, 5/6) are additionally connected together by a tubular guide element (12, 42) which surrounds the spring element (2) and that a parallel guide consisting of at least two links (14, 44) is produced in the tubular guide element (12, 42) by at least one transverse bore (16; 45, 46), whereby the tubular guide element (12, 42) has a lesser stiffness in the direction of the force (11) to be measured than in the direction perpendicular thereto.

2. Force pick-up according to claim 1, **characterised in that** the tubular guide element (12, 42) is formed integrally together with the two force introducing elements (3, 5/6).

3. Force pick-up according to claim 1, **characterised in that** the tubular guide element (12) comprises three links (14).

4. Force pick-up according to claim 1, **characterised in that** a square (4) for precise alignment of the force pick-up relative to the direction of the force to be measured is arranged at one force introducing element (3).

5. Force pick-up according to claim 1, **characterised in that** an orienting pin for precise alignment of the force pick-up relative to the direction of the force to be measured is arranged at one force introducing element (3).

6. Force pick-up according to claim 1, **characterised in that** the spring element (2) is welded in place between the two force-introducing elements (3, 5/6).

7. Force pick-up according to claim 1, **characterised in that** the spring element (2) is shrink-fitted in place between the two force-introducing elements (3, 5/6).

8. Force pick-up according to claim 1, **characterised in that** the spring element (2) is glued in place between the two force-introducing elements (3, 5/6).

9. Force pick-up according to claim 1, **characterised in that** the spring element (2) is constructed as a leaf spring and has a central transverse bore (24) and that strain gauges (5) are arranged on the thin points produced by the transverse bore.

10. Force pick-up according to claim 1, **characterised in that** the force pick-up comprises a sleeve (31) which can be screwed onto a force introducing element (5/6) and surrounds the tubular guide element (12, 14).
